# EUROPEAN PATENT SPECIFICATION

(11) **EP 0 389 658 B1**
(45) Date of publication and mention of the grant of the patent: **23.02.1994**
(21) Application number: 89105636.8
(22) Date of filing: 30.03.1989
(51) Int. Cl.: B29C 67/22

(54) **Mold for skin covered foamed plastic molding**
Form für hautbedeckte Schaumstofförmlinge
Moule pour pièces formées en mousse recouverte de peau

(43) Date of publication of application: 03.10.1990
(73) Proprietor: Ikeda Bussan Co., Ltd., Ayase-shi Kanagawa-ken (JP)
(72) Inventor: Mizuno, Hisayoshi, Ayase-shi Kanagawa-ken (JP); Mori, Masami, Ayase-shi Kanagawa-ken (JP)
(74) Representative: Grünecker, Kinkeldey, Stockmair & Schwanhäusser Anwaltssozietät

(56) References cited:
- EP-A- 0 248 547
- DE-A- 3 612 449
- GB-A- 2 224 236
- US-A- 4 712 765

## Description

The present invention relates to a mold for skin covered foamed plastic moldings suitable for molding foamed plastic articles, for example for use as car seat cushions and seat backs in conjunction with skin covers.

Skin covered foamed plastic has been used for car seat cushions, car seat backs, and car seat head rests. Generally a mold for manufacturing such a skin covered foamed plastic comprises a pair of an upper mold and a lower mold.

In manufacturing with such a mold, a skin cover is place on top of an inner surface of the lower mold onto which a liquid foam resin is poured in, and with the upper mold placed on top of the lower mold the liquid foam resin is foamed and stiffened to become the pad and at the same time a combination of the skin cover and the pad is achieved.

When pouring the liquid foam resin, care must be taken to avoid the penetration of the liquid foam resin through the skin cover. This has conventionally been done by providing a target plate which the liquid foam resin is going to hit first so that the liquid foam resin does not fall intensively on any single portion of the skin cover, or by attaching double side adhesive tapes on the skin cover.

However, the use of the target plate requires a manual operation by an operator which suppresses the efficiency of the manufacturing process. Further, the use of the double side adhesive tapes requires a cumbersome taping work and, in addition, differences in stiffness and touch can be caused at certain locations of the double side adhesive tapes.

DE-A-36 12 499 discloses an apparatus for producing foamed moldings of large volume comprising molds, an injection nozzle and an inclined impingement surface (plate) for slowing down the speed of the injected liquid foam resin. After the liquid foam resin has impinged on the inclined surface it flows at reduced speed down along the inclined surface through a manifold into a mold chamber. With this apparatus the introduction of air together with the liquid foam resin jet stream into the mold is avoided.

It is the object of the present invention to provide a mold for skin covered foamed plastic moldings capable of preventing the penetration of the liquid foam resin to be poured on a skin cover without manual operation of the target plate or the use of double side adhesive tapes, and also capable of improving the efficiency of the manufacturing process.

According to the present invention this object is achieved with a mold for a skin covered foamed plastic molding, comprising:
a lower mold having an inner mold surface for application of a skin cover and an upper mold fitted to close the lower mold, characterized in that the upper mold has an injection hole through which a liquid foam resin can be poured in; and a receiving means attached on the inner surface of the upper mold below the injection hole, the receiving means having an upturned brim such that the liquid foam resin poured on the receiving means through the injection hole is temporarily detained on the place member inside the upturned brim before falling furtherr down onto the skin cover. In accordance with the present invention there is further provided a process for producing a skin covered foamed plastic molding with the mold according to the present invention, comprising the steps of:
(a) providing a lower mold having an inner mold surface,
(b) applying to the inner mold surface of the lower mold a skin cover,
(c) placing on top of the lower mold an upper mold having an injection hole and on the inner surface below the injection hole a receiving means having an upturned brim for receiving a liquid foam resin falls on the skin cover
(d) pouring through the injection hole the liquid foam resin
(e) opening the upper mold after the foaming process of the liquid foam resin is completed to lift out the skin covered foamed plastic molding.

Fig. 1 is a cross sectional view of one embodiment of a mold for skin covered foamed plastic molding according to the present invention.

Fig. 2 is a perspective view of a penetration prevention plate to be utilized in the mold for skin covered foamed plastic molding of Fig. 1.

Fig. 3 is a partial magnified cross sectional view of the mold for skin covered foamed plastic moldings of Fig. 1 showing details of the configuration of the penetration prevention plate of Fig. 2 and of the holder members holding it.

Fig. 4 is another cross sectional view of the mold for skin covered foamed plastic moldings of Fig. 1 for explaining the moulding process using this mold.

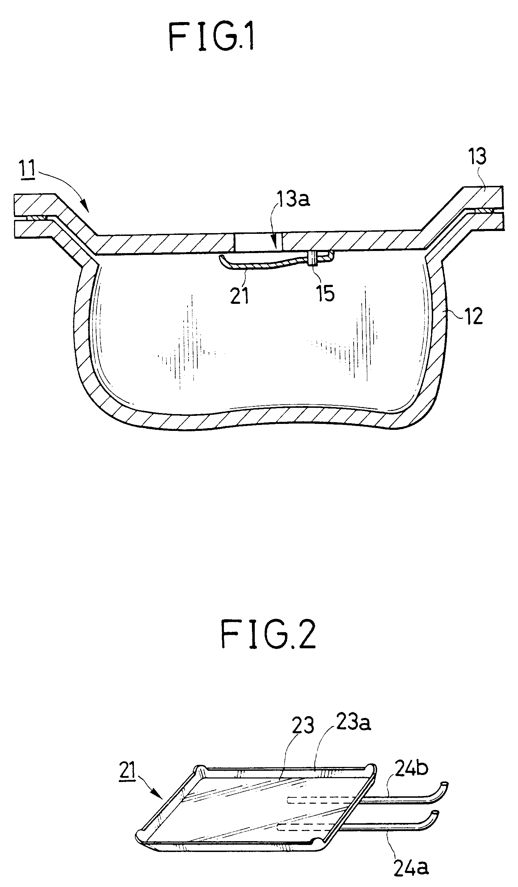

Referring now to Fig. 1, there is shown one embodiment of a mold for skin covered foamed plastic moldings according to the present invention.

In this embodiment, a mold 11 comprises a lower mold 12 and an upper mold 13 to be placed over the lower mold 12. The upper mold 13 has a liquid foam resin injection hole 13a, and on the bottom side of the upper mold 13 facing towards the lower mold 12, a pair of holder members 15 is fixed in the vicinity of the injection hole 13a by means of which the penetration prevention plate (receiving means) 21 is detachably held below the injection hole 13.

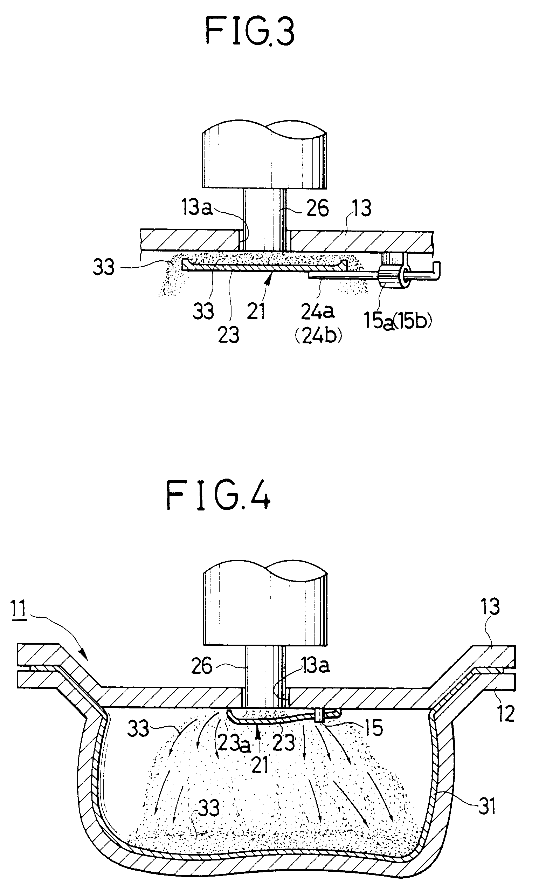

As shown in Fig. 2, this penetration prevention plate 21 comprises a plate member 23 with an upturned brim 23a and a pair of handle members 24a and 24b fixed on the bottom side of the plate member 23. As shown in Fig. 3, each one of the handle members 24a and 24b is held by one of the holder members 15 each of which has a pair of pinching members 15a and 15b for coactingly grasping the handle members 24a and 24b. Thus, the plate member 23 of the penetration prevention plate 21 receives liquid foam resin 33 poured from a nozzle 26 thrusted into the injection hole 13a before the liquid foam resin falls further down.

Referring now to Fig. 4, the molding process using this mold 11 will be explained.

First, a skin cover 31 is placed over a molding surface of the lower mold 12. Then, the upper mold 13 is placed in a predetermined mutual position.

Next, the liquid foam resin 33 is poured in from the nozzle 26 thrusted into the injection hole 13a. Because of the penetration prevention plate 21 below the injection hole 13a, the poured liquid foam resin 33 falls on the plate member 23 of the penetration prevention plate 21 first. As a result, the liquid foam resin 33 is temporarily detained on the plate member 23 inside the upturned brim 23a, and then flows out of the plate member 23, while undergoing the foaming process. Consequently, the pressure exerted by the liquid foam resin 33 falling from the plate member 23 on the skin cover 31 is much reduced by the time the liquid foam resin 33 finally falls on the skin cover 31.

Finally, after the foaming process of the liquid foam resin 33 is completed, the upper mold 13 is opened, so that a skin covered foamed plastic article composed of the skin cover 31 and the fully foamed foam resin can be lifted out of the lower mold 12.

The penetration prevention plate 21 may be detached from the holder members 15 and removed from the upper mold 13 either before or after the skin covered foamed plastic article is taken out.

It is to be noted that the shapes and the sizes of the penetration prevention plate 21 and the holding members 15 may be suitably modified in various ways.

As explained, according to this embodiment, it is possible to provide a mold for skin covered foamed plastic moldings capable of preventing the penetration of the liquid foam resin to be poured on a skin cover without the manual operation of the target plate or the use of double side adhesive tapes, and it is also possible to improve the efficiency of the manufacturing process, because the pressure exerted by the liquid foam resin 33 falling on the skin cover 31 is much reduced by the penetration prevention plate 21 which temporarily detains the liquid foam resin 33 from further fall, which not only scatters and slows down the liquid foam resin 33 but also provides time for the foaming process to progress before the liquid foam resin falls on the skin cover 31.

## Claims

1. A mold (11) for a skin covered foamed plastic moulding, comprising:
a lower mold (12) having an inner mold surface for application of a skin cover (31) and an upper mold (13) fitted to close the lower mold (12), **characterized in that** the upper mold (13) has an injection hole (13a) through which a liquid foam resin (33) can be poured in; and a receiving means (21) attached on the inner surface of the upper mold (13) below the injection hole (13a), the receiving means (21) having an upturned brim (23a) such that the liquid foam resin (33) poured on the receiving means (21) through the injection hole (13a) is temporarily detained on the plate member (23) inside the upturned brim (23a) before falling further down onto the skin cover (31).

2. The mold (11) of claim 1, further **characterized in that** the receiving means (21) comprises holder members (15) fixed on the inner surface of the upper mold (13) to detachably hold the plate member (23) below the injection hole (13a).

3. The mold (11) of claim 1, wherein the receiving means (21) is removably attached on the upper mold (30).

4. A process for producing a skin covered foamed plastic molding with a mold (11) according to claims 1 and/or 2, comprising the steps of:
(a) providing a lower mold (12) having an inner mold surface,
(b) applying to the inner mold surface of the lower mold (12) a skin cover (31),
(c) placing on top of the lower mold (12) an upper mold (13), having an injection hole (13a) and on the inner surface below the injection hole (13a) a receiving means (21) having an upturned brim (23a) for receiving a liquid foam resin (33) before the foam resin (33) falls on the skin cover (31),
(d) pouring through the injection hole (13a) the liquid foam resin (33),
(e) opening the upper mold (13) after the foaming process of the liquid foam resin (33) is completed to lift out the skin covered foamed plastic molding.

## Patentansprüche

1. Form (11) für ein hautbedecktes, geschäumtes Kunststoffformteil, die umfaßt:
eine untere Form (12) mit einer inneren Formfläche zum Auflegen einer Hautabdeckung (31) sowie eine obere Form (13), die so aufgepaßt wird, daß sie die untere Form (12) verschließt, **dadurch gekennzeichnet**, daß die obere Form (13) ein Einspritzloch (13a) aufweist, durch das ein flüssiger Harzschaum (33) eingegossen werden kann; sowie eine Auffangeinrichtung (21), die an der Innenfläche der oberen Form (13) unterhalb des Einspritzloches (13a) angebracht ist, wobei die Auffangeinrichtung (21) einen aufgebogenen Rand (23a) aufweist, so daß der auf die Auffangvorrichtung (21) durch das Einspritzloch (13a) eingegossene flüssige Harzschaum (33) zeitweilig auf dem Plattenelement (23) innerhalb des aufgebogenen Randes (23a) aufgehalten wird, bevor er weiter nach unten auf die Hautabdeckung (31) fällt.

2. Form (11) nach Anspruch 1, des weiteren **dadurch gekennzeichnet**, daß die Auffangeinrichtung (21) Halteelemente (15) umfaßt, die an der Innenseite der oberen Form (13) befestigt sind und das Plattenelement (23) lösbar unterhalb des Einspritzloches (13a) halten.

3. Form (11) nach Anspruch 1, wobei die Auffangeinrichtung (21) lösbar an der oberen Form (30) angebracht ist.

4. Verfahren zur Herstellung eines hautbedeckten, geschäumten Kunststofformteiles mit einer Form (11) nach Anspruch 1 und/oder 2, das die folgenden Schritte umfaßt:
(a) Bereitstellung einer unteren Form (12) mit einer inneren Formfläche,
(b) Auflegen einer Hautabdeckung (31) auf die innere Formfläche der unteren Form (12),
(c) Anbringen einer oberen Form (13) mit einem Einspritzloch (13a) auf der unteren Form (12), und einer Auffangeinrichtung (21) mit einem aufgebogenen Rand (23a) auf der Innenseite unterhalb des Einspritzloches (13a) zum Auffangen eines flüssigen Harzschaumes (33), bevor der Harzschaum auf die Hautabdeckung (31) fällt,
(d) Gießen des flüssigen Harzschaumes (33) durch das Einspritzloch (13a),
(e) Öffnen der oberen Form (13), wenn der Verschäumungsvorgang des flüssigen Harzschaumes (33) abgeschlossen ist, um das hautbedeckte, geschäumte Kunststofformteil herauszuheben.

## Revendications

1. Moule (11) pour le moulage d'une mousse recouverte de peau, comprenant:
un moule inférieur (12) ayant une surface de moulage intérieure pour l'application d'une peau (31) et un moule supérieur (13) ajusté pour fermer le moule inférieur (12), caractérisé en ce que le moule supérieur (13) présente un orifice d'injection (13a) par lequel une résine pour mousse liquide (33) peut être versée; et un moyen de réception (21) fixé à la surface intérieure du moule supérieur (13) sous l'orifice d'injection (13a), le moyen de réception (21) ayant un rebord tourné vers le haut (23a) tel que la résine pour mousse liquide (33) versée sur le moyen de réception (21) par l'orifice d'injection (13a) soit momentanément retenue sur la plaque (23) à l'intérieur du rebord tourné vers le haut (23a) avant de descendre en s'écoulant sur la peau (31).

2. Moule (11) selon la revendication 1, caractérisé en outre en ce que le moyen de réception (21) comprend des éléments de maintien (15) fixés sur la surface intérieure du moule supérieur (13) pour maintenir de façon amovible la plaque (23) sous l'orifice d'injection (13a).

3. Moule (11) selon la revendication 1, dans lequel le moyen de réception (21) est fixé de façon amovible sur le moule supérieur (30).

4. Procédé pour produire un moulage de mousse recouvert d'une peau avec un moule (11) selon les revendications 1 et/ou 2, comprenant les étapes consistant à:
(a) utiliser une moule inférieur (12) ayant une surface de moulage intérieure,
(b) appliquer à la surface de moulage intérieure du moule inférieur (12) une peau (31),
(c) placer sur le dessus du moule inférieur (12) un moule supérieur (13) ayant un orifice d'injection (13a) et sur la surface intérieure, sous l'orifice d'injection (13a), un moyen de réception (21) ayant un rebord tourné vers le haut (23a) pour recevoir une résine pour mousse liquide (33) avant que la résine pour mousse ne tombe sur la peau (31),
(d) verser par l'orifice d'injection (13a) la résine pour mousse liquide (33),
(e) ouvrir le moule supérieur (13) après l'opération de moussage de la résine pour mousse liquide (33) pour sortir le moulage de mousse recouvert d'une peau.
